# EUROPEAN PATENT APPLICATION

(11) **EP 4 780 012 A1**
(43) Date of publication of application: **22.07.2026**
(21) Application number: 24872735.6
(22) Date of filing: 22.08.2024
(51) Int. Cl.: H04N 23/63, H04N 23/60, H04N 23/69, H04N 23/695, H04N 23/61, H04N 23/57, H04M 1/02, G06T 3/047

(54) **ELECTRONIC DEVICE COMPRISING CAMERA AND OPERATION METHOD THEREOF**

(30) Priority: 25.09.2023 KR 20230128316; 15.12.2023 KR 20230183467
(71) Applicant: Samsung Electronics Co., Ltd., Suwon-si, Gyeonggi-do 16677 (KR)
(72) Inventor: OH, Yanggeun, Suwon-si Gyeonggi-do 16677 (KR); PARK, Jiyoon, Suwon-si Gyeonggi-do 16677 (KR); KIM, Jaechul, Suwon-si Gyeonggi-do 16677 (KR); PARK, Kyoungkeun, Suwon-si Gyeonggi-do 16677 (KR)
(74) Representative: Gulde & Partner
(86) International application number: PCT/KR2024/012494
(87) International publication number: WO 2025/071026

(57) **Abstract**

An electronic device according to various embodiments may be configured to: output a preview image acquired by a camera on a display; define a region of interest including at least one object image in the preview image; acquire angle information for identifying a direction in which the camera is oriented with respect to a reference plane, on the basis of a tilt of the electronic device detected by at least one sensor; determine a projection matrix to be applied to the region of interest, on the basis of the angle information and location information of the region of interest in the preview image; apply the projection matrix to the region of interest including the at least one object image; and display, on the display, another preview image including the region of interest to which the projection matrix is applied.

## Description

### [Technical Field]

The disclosure relates to an electronic device comprising a camera and an operation method thereof.

### [Background Art]

Images captured through a camera provided in an electronic device may cause a user to feel discomfort depending on a tilt of the electronic device or relative position of the camera to the electronic device, which occurs in various situations where images are captured. For example, when the camera captures a subject at an oblique angle without capturing in front of the subject, the subject in a preview image or a captured image may be outputted with a portion being stretched out.

In order to provide a subject image without a distortion to a user in various image capturing environments, it is necessary to correct the distortion of the image in real time considering an angle, a position, or an arrangement state of the camera.

The above information is presented as related-art only to assist with an understanding of the disclosure. No determination or assertion is made as to whether any of the above might be applicable as prior art with regard to the disclosure.

### [Disclosure of Invention]

### [Solution to Problem]

An electronic device according to an embodiment of the disclosure may include a camera, at least one sensor configured to acquire sensing data for detecting a tilt of the electronic device, a display, a memory configured to store instructions, and one or more processors, and, when executed by the one or more processors, the instructions may cause the electronic device to: display a preview image acquired by the camera on the display; define a region of interest including at least one object image within the preview image; acquire angle information which is used for identifying a direction in which the camera is oriented relative to a reference plane in response to the tilt of the electronic device being detected; determine a projection matrix to be applied to the region of interest, based on the angle information and position information of the region of interest within the preview image; apply the projection matrix to the region of interest including the at least one object image; and display another preview image including the region of interest to which the projection matrix is applied on the display.

An operation method of an electronic device according to an embodiment of the disclosure may include: displaying a preview image acquired by a camera on a display; defining a region of interest including at least one object image within the preview image; acquiring angle information which is used for identifying a direction in which the camera is oriented relative to a reference plane in response to a tilt of the electronic device being detected; determining a projection matrix to be applied to the region of interest, based on the angle information and position information of the region of interest within the preview image; applying the projection matrix to the region of interest including the at least one object image; and displaying another preview image including the region of interest to which the projection matrix is applied on the display.

### [Brief Description of Drawings]

FIG. 1 is a block diagram of an electronic device in a network environment according to various embodiment.
FIG. 2 is a block diagram illustrating a configuration of an electronic device according to an embodiment.
FIG. 3 is a flowchart illustrating a process for a method for an electronic device to correct a distortion of a region of interest including an object image based on a projection matrix according to an embodiment.
FIG. 4 is a view illustrating a matrix for correcting a distortion of an object image which occurs due to a curvature of a lens according to an embodiment.
FIG. 5 is a view to explain a direction in which a camera is oriented relative to a reference plane as the electronic device is tilted according to an embodiment.
FIG. 6 is a view illustrating a preview image which is outputted on a display based on the electronic device being tilted according to an embodiment.
FIG. 7 is a view illustrating a matrix for correcting a distortion of an object image within a range of the tilted angle of the electronic device from 0 to 90 degrees according to an embodiment.
FIG. 8 is a view illustrating a matrix for correcting a distortion of an object image within a range of the tilted angle of the electronic device from 90 to 180 degrees according to an embodiment.
FIG. 9 is a flowchart illustrating a process for a method for an electronic device to convert a preview image to another preview image according to an embodiment.
FIG. 10 is a flowchart illustrating a process for a method for an electronic device to output a corrected object image to a wearable electronic device, based on a control signal for controlling a correction level, received from the wearable electronic device, according to an embodiment.
FIG. 11 is a view schematically illustrating an electronic device receiving a signal for controlling a correction level from a wearable electronic device according to an embodiment.
FIG. 12 is a flowchart illustrating a process for a method for an electronic device to change a matrix based on a position of a camera according to an embodiment.
FIG. 13 is a view schematically illustrating a region of interest set based on a position of a camera, and an object image within the region of interest according to an embodiment.
FIG. 14 is a flowchart illustrating a process for a method for an electronic device to change a projection matrix based on a position of a region of interest which is shifted as a position of an object image is changed according to an embodiment.
FIG. 15 is a view illustrating an example of changing a region of interest based on a motion of an object in an electronic device according to an embodiment.
FIG. 16 is a flowchart illustrating a process for a method of identifying an object possessing a wearable electronic device connected with an electronic device among a plurality of objects according to an embodiment.
FIG. 17 is a view illustrating an example of identifying an object possessing a wearable electronic device connected with an electronic device among a plurality of objects according to an embodiment.
FIG. 18 is a flowchart illustrating a process for a method for a foldable electronic device to correct a distortion of a region of interest including an object image based on a projection matrix according to an embodiment.
FIG. 19 is a view illustrating an example of a first folding state of the foldable electronic device according to an embodiment.
FIG. 20 is a view illustrating an example of a second folding state of the foldable electronic device according to an embodiment.

Regarding explanation of the drawings, the same or similar reference numerals may be used for the same or similar components.

### [Mode for the Invention]

Hereinafter, various embodiments of the disclosure will be described in detail with reference to the accompanying drawings so that a person skilled in the art can easily embody. However, the disclosure may be implemented in different forms and is not limited to the embodiments set forth herein. In addition, in the drawings, parts having nothing to do with the descriptions are omitted for the clear description of the disclosure, and throughout the specification, the same or like reference numerals are used for the same or like elements.

The terms used in the disclosure are described as general terms currently used considering the functions mentioned in the disclosure, but may refer to various other terms according to the intent of those skilled in the art, precedent, the emergence of new technologies. Accordingly, the terms used in the disclosure should not be interpreted solely based on their names and should be interpreted based on the meanings of the terms and the whole context of the disclosure.

In addition, such terms as "first", "second" may be used to explain various components, but the components should not be limited by these terms. These terms may be used for the purpose of distinguishing one component from other components.

Throughout the specification, it is to be understood that if an element is referred to as "connected with/to" another element, it means that the element may be "directly connected" with another element or may be "electrically connected" with another element via an intervening element therebetween. It will be further understood that when a certain portion is referred to as "including" a certain element, it means that the certain portion does not exclude other components and may further include other components unless the context clearly indicates otherwise.

The phrase "in an embodiment" appearing in various places of the disclosure does not necessarily indicate the same embodiment.

An embodiment of the disclosure may be represented by functional block configurations and various processing steps. Some or all of the functional blocks may be implemented by various numbers of hardware and/or software configurations that perform specific functions. For example, the functional blocks of the disclosure may be implemented by one or more microprocessors or may be implemented by circuit configurations for predetermined functions. In addition, for example, the functional blocks of the disclosure may be implemented by various programming or scripting languages. The functional blocks may be implemented by an algorithm that is executed in one or more processors. The disclosure may employ related-art technologies for electronic configuration, signal processing, and/or data processing. Such terms "mechanism", "element", "means", and "configuration" may be broadly used and are not limited to mechanical and physical configurations.

In addition, connecting lines or connecting members among components shown in the drawings are only examples of functional connections and/or physical or circuitry connections. In an actual device, connections among components may be represented by a variety of alternative or additional functional connections, physical connections, or circuit connections.

Hereinafter, the disclosure will be described in detail with reference to the accompanying drawings.

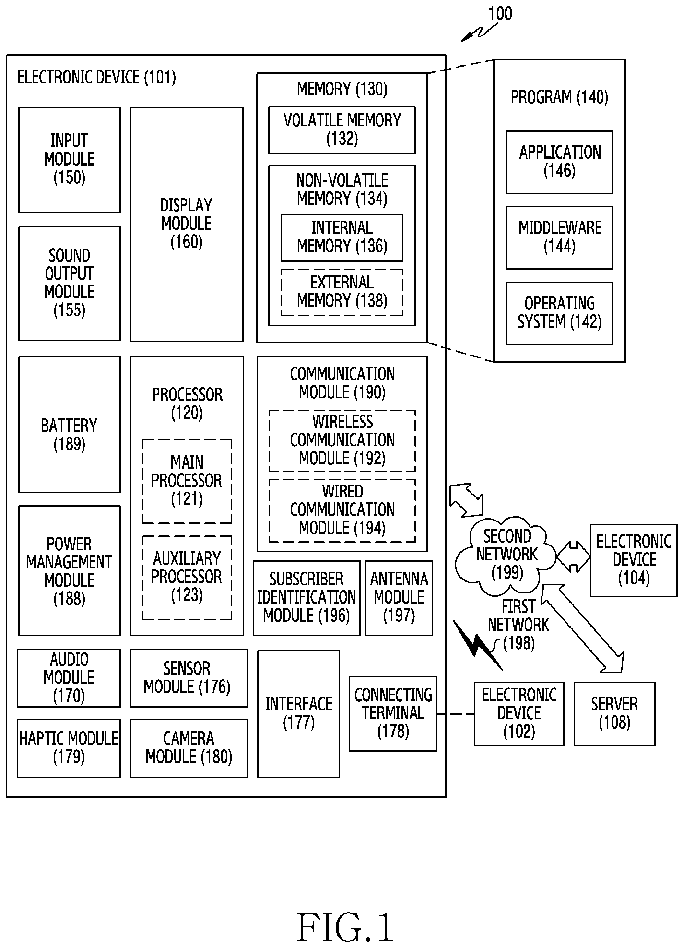

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

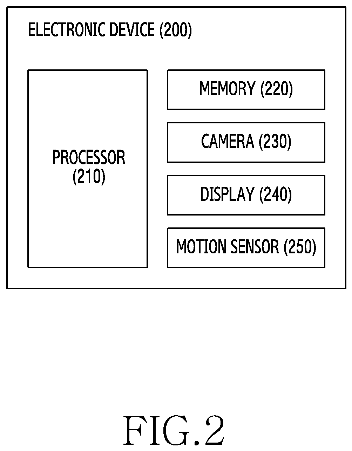

According to an embodiment of the disclosure, FIG. 2 is a block diagram illustrating a configuration of an electronic device according to an embodiment.

According to an embodiment of the disclosure, the electronic device 200 of FIG. 2 may correspond to the electronic device 101 of FIG. 1. The electronic device 200 may include a processor 210, a memory 220, a camera 230, a display 240, and a motion sensor 250. For example, the processor 210 may correspond to the processor 120 of FIG. 1. For example, the memory 220 may correspond to the memory 130 of FIG. 1. For example, the camera 230 may be included in the camera module 180 of FIG. 1. For example, the display 240 may be included in the camera module 180 of FIG. 1. For example, the motion sensor 250 may be included in the sensor module 176 of FIG. 1.

According to an embodiment of the disclosure, the processor 210 may output a preview image. The processor 210 may output at least a part of an image frame acquired from the camera 230 as a preview image. The processor 210 may output the preview image through the display 240.

According to an embodiment of the disclosure, the processor 210 may identify at least one object in the preview image outputted through the display 240. The processor 210 may identify at least one object in response to a user input. For example, in response to a touch input of touching at least one object within the preview image, the processor 210 may identify the at least one object. For example, in response to an input of selecting a user interface (UI) for identifying at least one object, the processor 210 may identify the at least one object. The processor 210 may identify at least one object in the preview image, based on a condition pre-stored in the memory 220. For example, a type of object (for example, person, animal, etc.) that may be identified by the processor 210 may be pre-stored in the memory 220.

According to an embodiment of the disclosure, the processor 210 may define a region of interest for the identified object. The region of interest within the preview image may be defined by adding a predetermined margin region to a region corresponding to the shape of the object. For example, the predetermined margin region may be pre-set in the electronic device 200. For example, the predetermined margin region may be adjusted by the processor 210 in response to an input for adjusting the margin region. The processor 210 may display a visual object indicating the region of interest on the display 240 in order to visually display the region of interest. For example, the visual object may be displayed to correspond to the shape of the object included in the region of interest.

According to an embodiment of the disclosure, the processor 210 may trace the object. For example, as the object moves, the processor 210 may define a region of interest in a position where the image of the object moves within the preview image. The processor 210 may define a region of interest corresponding to the image of the object that is changed as the object moves. For example, the processor 210 may display the visual object indicating the region of interest on the display 240 to correspond to the changed image of the object.

According to an embodiment of the disclosure, when the processor 210 outputs the region of interest defined for the object as a preview image, the preview image may be distorted. For example, an angle formed by the camera 230 and the object may vary based on an angle formed by the electronic device 200 and the horizontal plane. For example, a position of the object relative to the camera 230 may vary based on a position of the camera 230. Even if the angle formed by the electronic device 200 and the horizontal plane or the position of the camera 230 is the same, the outputted preview image may be distorted based on a motion of the object. The processor 210 may determine a projection matrix for correcting the distorted image based on an angle formed by the electronic device 200 and the horizontal plane, a position of the camera 230, or a motion of the object.

According to an embodiment of the disclosure, the processor 210 may determine a projection matrix based on angle information on a tilt of the electronic device 200 acquired through the motion sensor 250. The angle information on the tilt of the electronic device 200 may include angle information indicating a degree of tilt of the electronic device 200 relative to pre-set one or more reference planes. For example, information on an angle formed by the electronic device 200 and the horizontal plane may be acquired through the sensor 250. The processor 210 may identify a direction in which the camera 230 is oriented relative to the one or more pre-set reference planes, based on the acquired angle information. The processor 210 may determine a projection matrix based on the identified angle.

According to an embodiment of the disclosure, the motion sensor 250 may include at least one of a gyro sensor (not shown) or a hall sensor (not shown). The processor 210 may identify an arrangement state of the electronic device 200 by using the gyro sensor or hall sensor. However, the above sensors are examples and may further include other types of sensors.

The electronic device 200 may include a hall sensor and a magnet. The hall sensor may detect a change in electric signals based on the approach or retreat of an object having magnetism or magnetic force. For example, when the electronic device 200 includes a first housing and a second housing which are connected via a hinge, a magnetism value changing according to the approach or retreat of a magnet included in the second housing to or from the first housing may be measured by a hall sensor included in the first housing. The processor 210 may identify an arrangement state of the electronic device 200 based on the measured magnetism value. The processor 210 may identify a position of the camera 230 based on the identified arrangement state of the electronic device 200.

The electronic device 200 may include a gyro sensor. The gyro sensor may measure acceleration acting along three axes (for example, x-axis, y-axis, z-axis) of the electronic device 200. For example, the gyro sensor may measure a rotation angle or an inclination of the electronic device 200 relative to the three axes. The processor 210 may identify a position of the camera 230 relative to the electronic device 200 based on at least one of the inclination or the rotation angle of the electronic device 200 relative to the horizontal plane by using the gyro sensor. In addition, the processor 210 may identify a posture of the electronic device 200 by using the gyro sensor. For example, the processor 210 may acquire inclination information of the electronic device 200 relative to the ground by receiving acceleration data from the gyro sensor. The processor 210 may identify a position of an object relative to the camera 230 based on the position of the camera 230. The processor 210 may determine a projection matrix based on the identified position of the object relative to the camera 230.

According to an embodiment of the disclosure, the sensor 250 may include a motion sensor. The processor 210 may acquire information on a motion of an object from the motion sensor. The processor 210 may determine a projection matrix based on the information on the motion of the object.

According to an embodiment of the disclosure, the processor 210 may output a corrected preview image of the distorted preview image through the display 240, based on the determined projection matrix. The processor 210 may change the projection matrix in response to an input for correcting the region of interest even while outputting the corrected preview image. The processor 210 may re-correct the corrected preview image based on the changed projection matrix.

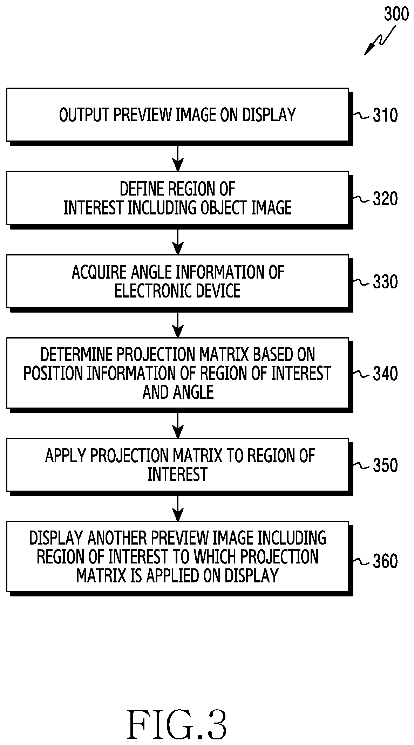

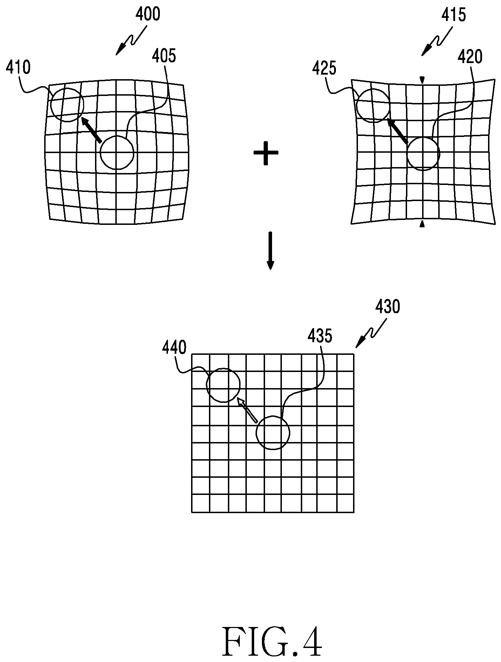

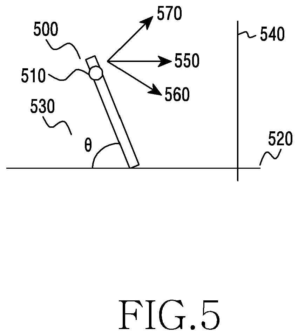

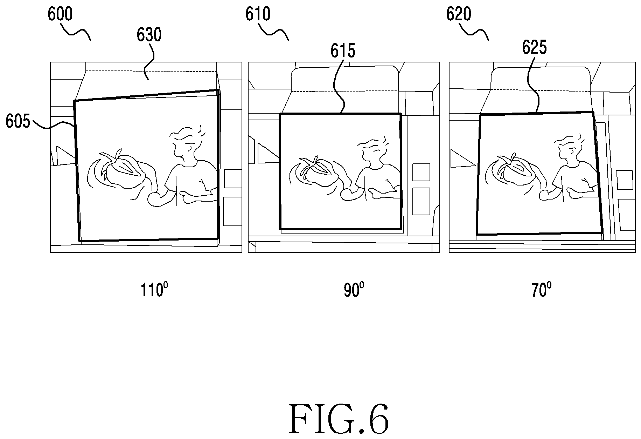

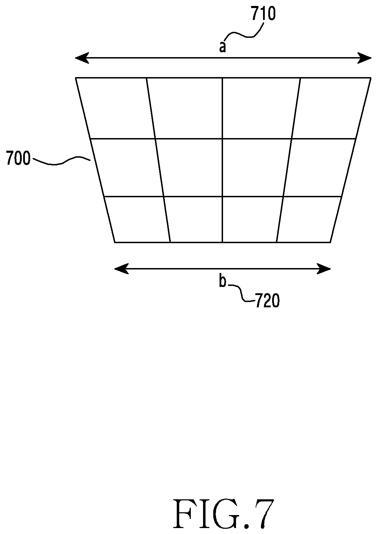

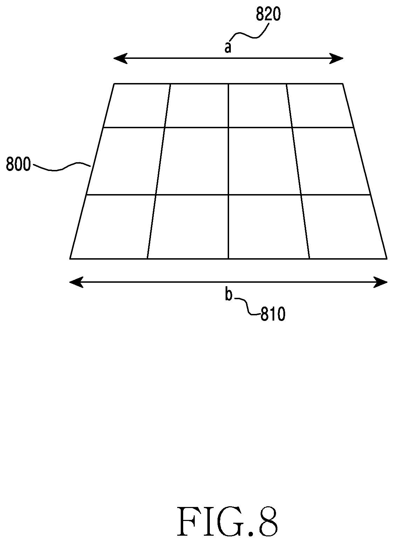

According to an embodiment of the disclosure, FIG. 3 is a flowchart 300 illustrating a process for a method for an electronic device to correct a distortion of a region of interest including an object image based on a projection matrix according to an embodiment. FIG. 4 is a view illustrating a matrix for correcting a distortion of an object image which occurs due to a curvature of a lens according to an embodiment. FIG. 5 is a view to conceptually explain a direction in which a camera is oriented relative to a reference plane as the electronic device is tilted according to an embodiment. FIG. 6 is a view illustrating a preview image which is outputted on a display based on the electronic device being tilted according to an embodiment. FIG. 7 is a view illustrating a matrix for correcting a distortion of an object image within a range of the tilted angle of the electronic device from 0 to 90 degrees according to an embodiment. FIG. 8 is a view illustrating a matrix for correcting a distortion of an object image within a range of the tilted angle of the electronic device from 90 to 180 degrees according to an embodiment.

Referring to FIG. 3, in operation 310, the processor 210 may output a preview image through the display 240. The processor 210 may output at least a part of an image frame acquired from the camera 230 on the display 240 as a preview image. For example, the camera 230 may acquire images frames of an external object (for example, a user) based on a user input (for example, a touch input), and the processor 210 may display at least a part (for example, a preview image) of the image frames acquired from the camera 230 on the display 240.

In an embodiment of the disclosure, in operation 320, the processor 210 may define a region of interest in an object image. For example, the region of interest may be a region that is defined based on data associated with a user, or a region that is pre-defined in the electronic device 101. For example, the region of interest may be defined based on images pre-acquired by the camera 230. That is, the processor 210 may identify a plurality of images pre-acquired through the camera 230, and may define an object included in the plurality of images in common (for example, user's face) as a region of interest.

According to an embodiment of the disclosure, the processor 210 may identify at least one object in the preview image outputted through the display 240. The processor 210 may identify at least one object in response to a user input. For example, in response to a touch input of touching at least one object within the preview image, the processor 210 may identify the at least one object. For example, in response to an input of selecting a user interface (UI) for identifying at least one object, the processor 210 may identify the at least one object. The processor 210 may identify at least one object in the preview image, based on a condition pre-stored in the memory 220. For example, a type of object (for example, person, animal, etc.) that may be identified by the processor 210 may be pre-stored in the memory 220.

According to an embodiment of the disclosure, the processor 210 may define the identified object as a region of interest. For example, in response to a user input for defining a region of interest, the processor 210 may define a region of interest in the identified object. The region of interest may be defined by adding a predetermined margin region to a region corresponding to the shape of the object. That is, the region of interest may be referred to as an image region including the shape of the object. For example, the predetermined margin region may be pre-set in the electronic device 200. According to an embodiment of the disclosure, the predetermined margin region may be adjusted based on a user input or pre-stored setting. For example, the processor 210 may display the region of interest including the object for the user through the display 240. In this case, the user may drag the displayed region of interest and the processor 210 may increase or reduce the region of interest based on the direction and/or degree of dragging.

According to an embodiment of the disclosure, the processor 210 may reduce or increase the region of interest based on a type of an object included in the region of interest. That is, when the type of the object included in the region of interest is a first type (for example, puppy, plants), the processor 210 may set the size of the margin region of the region of interest to a first size. When the type of the object included in the region of interest is a second type (for example, person), the processor 210 may set the size of the margin region of the region of interest to a second size that is larger than the first size.

According to an embodiment of the disclosure, the processor 210 may display a visual object indicating the region of interest on the display 240 in order to visually display the region of interest. For example, the visual object may be displayed to correspond to the shape of the object included in the region of interest.

According to an embodiment of the disclosure, the processor 210 may trace an object included in images. For example, the processor 210 may capture images of an object using the camera 230 for a designated time, and may identify a change in the position of the object included in the captured images. In this case, when the movement of the object is completed, the processor 210 may define a certain region including the object having completed movement as a region of interest. In an example, the processor 210 may identify that the movement of the object has been completed, based on identifying that the change in the position of the object in the captured images disappears.

According to an embodiment of the disclosure, the processor 210 may display a region of interest that is newly defined according to a movement of the object for the user through the display 240. For example, the processor 210 may identify a movement of the object in the middle of displaying a first region of interest including the object before movement through the display 240. In this case, the processor 210 may stop displaying the first region of interest while the object is moving, and may display a second region of interest including the object which has completed movement on the display 240 when the movement of the object is completed.

According to an embodiment of the disclosure, a preview image corresponding to the region of interest including the object may be an image that is corrected based on a projection matrix. For example, the degree of distortion in a preview image including an object may vary depending on which portion of a convex lens the object of the preview image corresponds to due to the shape of the convex lens included in the camera 230. That is, the degree of distortion may be different depending on whether the object is captured through a first portion of the lens included in the camera 230 or through a second portion of the lens included in the camera 230.

Accordingly, prior to outputting the region of interest set in the object as a preview image, the processor 210 may correct the region of interest defined in the object by using a projection matrix which is determined based on the curvature of the lens, and may output the corrected region of interest as a preview image.

According an embodiment of the disclosure, referring to FIG. 4, an image frame of an object acquired from the camera 230 may show a degree of distortion becoming greater from the center 405 of an uncorrected preview image 400 toward the edge 415 depending on the convex shape of a lens.

The electronic device 200 according to an embodiment may perform lens distortion correction (LDC) to correct a distortion caused by the convex characteristics of a lens. LDC is a technique that identifies a distortion coefficient by comparing a distorted image and a normal image, and corrects the distortion by applying an inverse distortion to the distortion. A distortion correction rate enables a distorted image to be corrected by calibrating intrinsic parameters of a camera.

Lens distortion correction technologies are generally divided into a "metric" method and a "non-metric" method. The metric method refers to a method of correcting distortion of images by measuring all of the intrinsic and extrinsic parameters of a camera model which may influence an image distortion based on correspondence of the images, and the non-metric method refers to a method of correcting curved components caused by a lens distortion into linear shapes in a process of acquiring images on the assumption that linear components of an external object should be projected on the image in a linear shape, without being based on correspondence. Lens distortion correction (LDC) applied in various embodiments of the disclosure may employ well-known various techniques in addition to the above-described methods.

For example, as an object is positioned closer to the edge 410 of the uncorrected preview image 400, an image frame that is more stretched out in the horizontal or vertical direction than the real object may be acquired. The processor 210 may apply a projection matrix 415 for correcting a distortion caused by the curvature of the lens in the uncorrected preview image 400 of the object to the uncorrected preview image 400 of the object, and may output a corrected preview image 430. For example, the projection matrix 415 for correcting a distortion caused by the curvature of the lens may be formed to give an effect of being concave from the edge 425 toward the center 420. The processor 210 may output a preview image in which the distortion caused by the difference in the curvature of the lens between the edge 440 and the center 435 is corrected in the corrected preview image 430. Before outputting the corrected preview image 430, the processor 210 may re-calculate coordinate values of pixels which are changed as a result of applying the projection matrix 415 to the uncorrected preview image 400, and may output the corrected preview image 430.

In an embodiment of the disclosure, the processor 210 may change the projection matrix based on a distortion caused by an angle of the camera 230 relative to the horizontal plane or a position of the object in the preview image in order to correct the distortion of the preview image, while correcting the distortion caused by the curvature of the lens.

In an embodiment of the disclosure, referring to FIG. 3, in operation 330, the processor 210 may acquire angle 530 information of the electronic device 200. The processor 210 may acquire information related to an angle formed by the electronic device 200 with at least one pre-set reference plane by using the sensor 250. For example, the processor 210 may acquire information on the angle 530 formed by the electronic device 200 with the horizontal plane by using the sensor 250. For example, the sensor 250 may include a gyro sensor. The processor 210 may identify a degree of tilt of the electronic device 200 relative to the horizontal plane by using the gyro sensor. The processor 210 may acquire the angle 530 of the electronic device 200 relative to the horizontal plane based on the degree of tilt of the electronic device 200. For example, referring to FIG. 5, the angle 530 of the electronic device 500 relative to the horizontal plane 520 may be θ. For example, the electronic device 500 may correspond to at least one of the electronic device 101 of FIG. 1 or the electronic device 200 of FIG. 2.

According to an embodiment of the disclosure, the electronic device 500 may identify angle information of the electronic device 500 and a direction in which a camera 510 is oriented relative to at least one reference plane. Referring to FIG. 5, for example, the electronic device 500 may identify the direction in which the camera 500 is oriented relative to a vertical plane 540, based on the information on the angle formed by the electronic device 500 with the horizontal plane 520. In this case, the at least one reference plane may include the horizontal plane 520 and the vertical plane 540. For example, as the angle 530 formed by the electronic device 500 with the horizontal plane 520 increases, the direction in which the camera 510 is oriented relative to the vertical plane 540 may change from a first direction 550 to a second direction 560. For example, as the angle 530 formed by the electronic device 500 with the horizontal plane 520 is reduced, the direction in which the camera 510 is oriented relative to the vertical plane 540 may change from the first direction 550 to a third direction 570. For example, the first direction 550 may be a direction in which the camera 510 is oriented relative to the vertical plane 540 when the angle 530 formed by the electronic device 500 with the horizontal plane is 90̊. For example, the first direction 560 may be a direction that is parallel with the horizontal plane 520. For example, the second direction 560 may be a direction in which the camera 510 is oriented relative to the vertical plane 540 when the angle 530 formed by the electronic device 500 with the horizontal plane is greater than 90 degrees. For example, the third direction 570 may be a direction in which the camera 510 is oriented relative to the vertical plane 540 when the angle 530 formed by the electronic device 500 with the horizontal plane is less than 90 degrees.

According to an embodiment of the disclosure, the degree of distortion of the preview image outputted by the processor 210 on the display 240 may vary based on the angle 530 of the electronic device 500 relative to the horizontal plane 520. As the angle 530 formed by the electronic device 500 with the horizontal plane 520 changes, the direction in which the camerate 510 is oriented relative to the vertical plane 540 may change, and, based on the direction in which the camera 510 is oriented relative to the vertical plane 540, the degree of distortion of the preview image outputted by the processor 210 on the display 240 may vary. For example, referring to FIG. 6, preview images 600, 610, 620 which output at least a part of the image frames of the same object 630 on the display 240 may be different depending on the angle 530 of the electronic device 500 relative to the horizontal plane 520. An image of a lower end of the image of the object 600 within a third region of interest 625 that is outputted by the processor 210 when the angle 530 is 70 degrees and accordingly the direction in which the camera 510 is oriented relative to the vertical plane 540 is the third direction 570 may be distorted relatively wider than an image of a lower end of the object 600 within a second region of interest 615 that is outputted by the processor 210 when the angle 530 is 90 degrees and accordingly the direction in which the camera 510 is oriented relative to the vertical plane 540 is the first direction 550. To contrary, an image of an upper end of the image of the object 600 within a third region of interest 625 that is outputted by the processor 210 when the angle 530 is 110 degrees and accordingly the direction in which the camera is oriented relative to the vertical plane 540 is the second direction 560 may be distorted relatively wider than an image of an upper end of the object 600 within the second region of interest 615 that is outputted by the processor 210 when the angle 530 is 90 degrees and accordingly the direction in which the camera 510 is oriented relative to the vertical plane 540 is the first direction 550. The processor 210 may determine a projection matrix based on the degrees of distortion of the image acquired from the same object 600 at different angles 530.

In an embodiment of the disclosure, referring to FIG. 3, in operation 340, the processor 210 may determine a projection matrix based on position information and angle information of the region of interest. Determining the projection matrix based on the position information and the angle information of the region of interest may include changing the projection matrix based on the position information and the angle information of the region of interest. The processor 210 may modify the projection matrix based on the angle of the electronic device 500 relative to the horizontal plane 520. For example, referring to FIG. 7, as the angle 530 is smaller than 90 degrees, the lower end of the object image within the region of interest may be widely distorted, and accordingly, a rectangular projection matrix 700 may be changed to a modified matrix 700 of an inverted trapezoid shape, such that the length of the upper side 710 is relatively longer than the length of the lower side 720. For example, referring to FIG. 8, 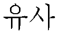 as the angle 530 is greater than 90 degrees, the upper end of the object image within the region of interest may be widely distorted, and accordingly, a rectangular projection matrix 800 may be changed to a modified matrix 800 of a trapezoid shape, such that the length of the lower side 810 is relatively longer than the length of the upper side 820.

In an embodiment of the disclosure, the processor 210 may change the projection matrix based on the ratio of the upper base and the lower base (for example, b/a value) of the image of the object within the region of interest. In the ratio of the upper base and the lower base, *b* may refer to the length of a minor axis of the image with reference to the image of the object, and *a* may refer to the length of a major axis. For example, in an embodiment of the disclosure, the ratio of the upper base and the lower base of the projection matrix may refer to a ratio between the length of an upper end and the length of a lower end of the projection matrix.

In an embodiment, when the angle 530 formed by the electronic device 200 with the horizontal plane 520 is smaller than 90 degrees, the processor 210 may change the projection matrix to increase the ratio of *a* compared to *b,* based on identifying that the ratio of the upper base and the lower base of the image of the object within the third preview image 620 of FIG. 6 is b/a<1. The processor 210 may correct the ratio of the upper base and the lower base of the image of the object to be close to 1, based on the changed projection matrix. When the angle formed by the electronic device 200 with the horizontal plane 520 is greater than 90 degrees, the processor 21 may change the projection matrix to increase the ratio of *b* compared to *a,* based on identifying that the ratio of the upper base and the lower base of the image of the object within the first preview image 600 of FIG. 6 is b/a>1.

However, the method of changing the projection matrix is not limited to the method of modifying the length of the upper side or lower side of the rectangular projection matrix, and the projection matrix may be changed based on a position of the object within the preview image, or may be changed within a range for achieving the aim for correcting a distortion of a preview image.

In an embodiment of the disclosure, referring to FIG. 3, in operation 350, the processor 210 may applying the determined projection matrix to the region of interest including the object image. The processor 210 may apply the determined projection matrix to the distorted image of the object within the region of interest, thereby outputting an undistorted image of the object as a preview image. For example, the processor 210 may apply the modified matrix 800 of FIG. 8 to the first region of interest 605 of FIG. 6, thereby outputting an undistorted image of the object as a preview image. For example, the processor 210 may apply the modified matrix of FIG. 7 to the third region of interest 625 of FIG. 6, thereby outputting an undistorted image of the object as a preview image. The projection matrix may be applied not only to the image of the object but also to the region of interest including the image of the object.

In an embodiment of the disclosure, referring to FIG. 3, in operation 360, the processor 210 may display another preview image including the region of interest to which the projection matrix is applied on the display. The processor 210 may reset a region of interest for another preview image including the corrected object image. For example, the processor 210 may reset the region of interest to correspond to the corrected image of the object since the corrected image of the object is different from the original image of the object before correction. The processor 210 may output the corrected image of the object within the reset region of interest as a preview image.

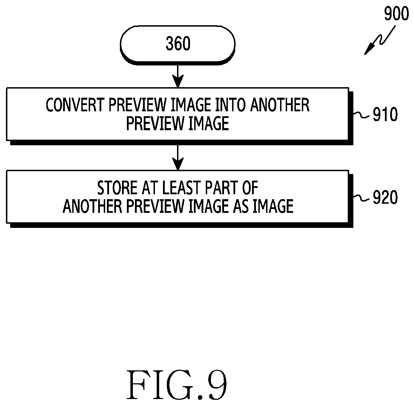

According to an embodiment of the disclosure, FIG. 9 is a flowchart 900 illustrating a process for a method for an electronic device to convert a preview image into another preview image according to an embodiment.

In an embodiment of the disclosure, referring to FIG. 9, in operation 910, the processor 210 may convert a preview image into another preview image. The processor 210 may reset a region of interest based on the converted preview image. The processor 210 may output the converted preview image including a corrected image of an object that results from correction of the object for which the region of interest is set among the plurality of images within the preview image based on a changed projection matrix. The processor 210 may execute a zooming or panning function to output the corrected image of the object as the converted preview image. For example, when the object for which the region of interest is set is positioned relatively farther away than other objects within the preview image, the processor 210 may execute a zoom-in function to output the converted preview image including the corrected image of the object. For example, when the object for which the region of interest is set is positioned relatively closer than other objects within the preview image, the processor 210 may execute a zoom-out function to output the converted preview image including the corrected image of the object. For example, when the object for which the region of interest is set is positioned relatively to a side relative to other objects within the preview image, the processor 210 may execute a panning function to shift the preview image to place the corrected object at the center of the converted preview image in order to output the corrected image of the object at the center of the preview image. Zooming or panning may be independently executed or may be executed in combination.

According to an embodiment of the disclosure, when the processor 210 outputs the converted preview image including the corrected image based on the zooming or panning function, the processor 210 may reset a region of interest to correspond to the corrected image. For example, the converted preview image including the corrected image of the object may not be the same as the original preview image before correction based on zooming or panning, and hence, a region of interest may be reset to correspond to the image of the object within the converted preview image after correction.

In an embodiment of the disclosure, referring to FIG. 9, in operation 920, the processor 210 may store at least a part of the converted preview image including the reset region of interest as an image. The processor 210 may store at least a part of the converted preview image including the reset region of interest as an image in response to a user input of acquiring an image. For example, the user input may include selecting a UI for acquiring images. For example, the user input may include a touch input of touching the display 240.

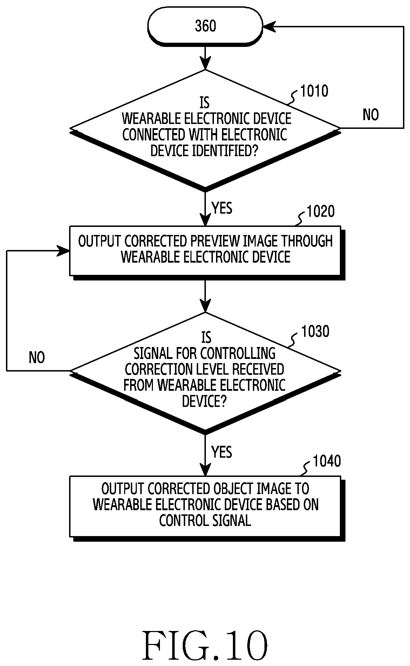

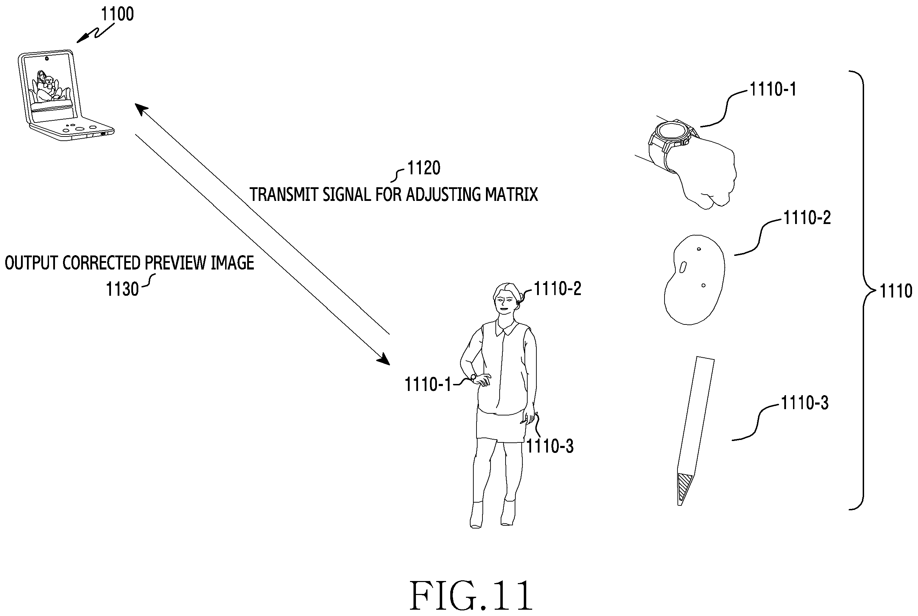

According to an embodiment of the disclosure, FIG. 10 is a flowchart 1000 illustrating a process for a method for an electronic device to output a corrected object image to a wearable electronic device, based on a control signal for controlling a correction level received from the wearable electronic device according to an embodiment. According to an embodiment of the disclosure, FIG. 11 is a view schematically illustrating an electronic device receiving a signal for controlling a correction level from a wearable electronic device according to an embodiment.

In an embodiment of the disclosure, referring to FIG. 10, in operation 1010 after operation 360 is performed, the processor 210 may identify a wearable electronic device 1110 connected with the electronic device 1100. For example, the electronic device 1100 may correspond to the electronic device 101 of FIG. 1. For example, the electronic device 1100 may correspond to the electronic device 200 of FIG. 2.

In an embodiment of the disclosure, the processor 210 may identify connection based on device information of the wearable electronic device 1110. For example, the device information may include but not limited to the model name, international mobile equipment identity (IMEI) number, manufacturer, operating system, version information, screen resolution of the wearable electronic device 1110, and an identification value of an application installed in the wearable electronic device 1110. The processor 210 may request device information from the wearable electronic device 1110 through a communication unit which performs wireless communication, and the electronic device 1100 may receive the device information from the wearable electronic device 1110.

In an embodiment of the disclosure, when the processor 210 fails to identify the connected wearable electronic device 1110, the processor 210 may output the region of interest reset for the corrected object image to the display 240 of the electronic device 1100 according to operation 360.

In an embodiment of the disclosure, when the processor 210 identifies the connected wearable electronic device 1110, the processor 210 may output the corrected preview image through the wearable electronic device 1110. For example, the processor 210 may output the preview image through a smart watch 1110-1 among the wearable electronic devices 1110. The preview processor 210 may control the communication unit to output at least a part of the preview image to the wearable electronic device 1110. The processor 210 may transmit a signal 1130 for controlling the preview image outputted to the wearable electronic device 1110 to the wearable electronic device 1110.

In an embodiment of the disclosure, the electronic device 1100 may receive a control signal for adjusting a correction level of an object image from the wearable electronic device 1110 through the communication unit. For example, the electronic device 110 may receive a control signal for adjusting the correction level of the object image from the smart watch 1110-1, a smart pen 1110-3 among the wearable electronic devices 1110. For example, the processor 210 may adjust the projection matrix based on reception of the control signal for adjusting the correction level. The processor 210 may adjust the projection matrix and may reset the region of interest set for the object. The processor 210 may output a preview image corrected based on adjustment through the wearable electronic device 1110 (for example, the smart watch 1110-1). The processor 210 may transmit a signal for indicating that correction is completed to the wearable electronic device 1110 (for example, the smart watch 1110-1, a smart earphone 1110-2, the smart pen 1110-3).

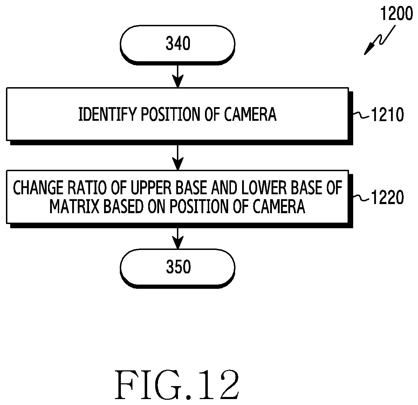

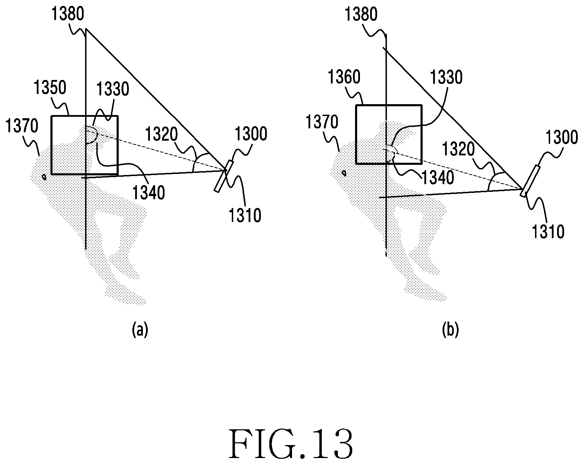

According to an embodiment of the disclosure, FIG. 12 is a flowchart 1200 illustrating a process for a method for an electronic device to change a matrix based on a position of a camera according to an embodiment. FIG. 13 is a view schematically illustrating a region of interest set based on a position of a camera, and an object image within the region of interest according to an embodiment.

In an embodiment of the disclosure, when the processor 210 changes the projection matrix in operation 340 after operation 330 is performed, the processor 210 may additionally consider a position of a camera. Operations 1210 to 1220 are not limited to operations that should be necessarily performed after operation 330. In an embodiment of the disclosure, referring to FIG. 12, in operation 1210, the processor 210 may identify a position of a camera 1330. The processor 210 may acquire rotation information of the electronic device 1330 by using a gyro sensor. The processor 210 may identify the position of the camera 1310 based on the rotation information. For example, the electronic device 1300 may correspond to at least one of the electronic device 101 of FIG. 1, the electronic device 200 of FIG. 2, the electronic device 500 of FIG. 5, or the electronic device 1100 of FIG. 11. For example, the camera 1310 may correspond to the camera 230 of FIG. 2.

According to an embodiment of the disclosure, the gyro sensor may measure a rotation angle or an inclination of the electronic device 1300 relative to three axes (for example, x-axis, y-axis, or z-axis). For example, when the electronic device 1300 rotates with reference to the x-axis that faces in parallel with the horizontal plane and passes through the display 240 of the electronic device 1300, the processor 210 may identify a relative position of the camera 1310 based on a rotation angle measured by the gyro sensor. For example, when the electronic device 1300 rotates by 0 degree with reference to the x-axis, the camera 1310 may be positioned at a position relatively far away from the ground. For example, the position of the camera 1310 within the electronic device 1300 may be relatively far away from the ground. For example, when the electronic device 1300 rotates by 180 degrees with reference to the x-axis, the camera 1310 may be positioned at a position relatively close to the ground. For example, the position of the camera within the electronic device 1300 may be relatively close to the ground.

According to an embodiment of the disclosure, a view angle 1320 at which the camera 1310 is enabled to capture an object 1370 may range from 80 degrees to 85 degrees. When the processor 210 captures the object 1370 through the camera 1310, the straight line perpendicular to the lens of the camera 1370 may meet a wall plane 1380 perpendicular to the horizontal plane, thereby splitting the view angle 1320 into two angles. The two angles may include an upper angle 1330 and a lower angle 1340. For example, the upper angle 1330 may be an angle that is formed relatively above the lower angle among the two angles. The sum of the lower angle and the upper angle may be 180 degrees.

In an embodiment of the disclosure, when the electronic device 1300 rotates by 0 degree with reference to the x-axis and the processor identifies that the camera 1310 is positioned relatively far away from the ground, the upper angle 1330 may be larger than a reference angle. For example, as the upper angle 1330 is large, the processor 210 may acquire an image frame of a subject with a wide upper part when the object 1370 is a subject. For example, as the upper angle 1330 is large, the processor 210 may acquire an image frame of a person with a broad forehead when the object 1370 is a person. When the electronic device 1300 rotates by 180 degrees with reference to the x-axis and the processor identifies that the camera 1310 is positioned relatively close to the ground, the lower angle 1340 may be larger than the reference angle. For example, as the lower angle 1340 is large, the processor 210 may acquire an image frame of a subject with a wide lower part when the object 1370 is a subject. For example, as the lower angle 1340 is large, the processor 210 may acquire an image frame of a person with a wide jaw area when the object 1370 is a person. However, the lower angle 1340 may not be larger than the upper angle 1330 in a typical capturing operation.

According to an embodiment of the disclosure, the image frame of the object 1370 may be distorted based on a position of the camera 1310. The processor 210 may change the projection matrix to correct a distorted image frame based on the position of the camera 1310.

In an embodiment of the disclosure, referring to FIG. 12, in operation 1220, the processor 210 may change the matrix based on the position of the camera.

In an embodiment of the disclosure, referring to FIG. 13A, the camera 1310 may be positioned relatively far away from the ground and the image frame where the upper part of the object 1370 appears relatively wide may be acquired. The processor 210 may change the projection matrix to a matrix of a trapezoidal shape like the modified matrix 800 of FIG. 8 with the longer lower side 810 and the shorter upper side 820 in order to correct the distortion of the image frame where the upper part of the object 1370 appears relatively wide. The processor 210 may correct the image of the object 1370 within the region of interest 1350 based on the changed projection matrix, and may output the image as a preview image.

In an embodiment of the disclosure, referring to FIG. 13B, the camera 1310 may be positioned relatively close to the ground and the image frame where the lower part of the object 1370 appears relatively wide may be acquired. The processor 210 may change the projection matrix to a matrix of a trapezoidal shape like the modified matrix 700 of FIG. 7 with the longer upper side 710 and the shorter lower side 720 in order to correct the distortion of the image frame where the lower part of the object 1370 appears relatively wide. The processor 210 may correct the image of the object 1370 within the region of interest 1360 based on the changed projection matrix, and may output the image as a preview image.

In an embodiment of the disclosure, the processor 210 may change the projection matrix based on the ratio of the upper base and the lower base (for example, b/a value) of the image of the object within the region of interest. In the ratio of the upper base and the lower base, *b* may refer to the length of a minor axis of the image with reference to the image of the object, and *a* may refer to the length of a major axis. For example, the ratio of the upper base and the lower base of the object image that is acquired when the camera 1310 is positioned at the center of the electronic device 1300 may be set to b/a=1 in the electronic device 200.

In an embodiment of the disclosure, when the camera 1310 is positioned relatively far away from the ground (a), the processor 210 may change the projection matrix to increase the ratio of *a* compared to *b,* based on identifying that the ratio of the upper base and the lower base of the image of the object within the region of interest 1350 of FIG. 13 is b/a<1. The processor 210 may correct the ratio of the upper base and the lower base of the image of the object to be close to 1, based on the changed projection matrix. When the camera 1310 is positioned relatively close to the ground (b), the processor 210 may change the projection matrix to increase the ratio of *b* compared to *a,* based on identifying that the ratio of the upper base and the lower base of the image of the object within the region of interest 1360 of FIG. 13 is b/a>1. The processor 210 may correct the ratio of the upper base and the lower base of the image of the object to be close to 1, based on the changed projection matrix.

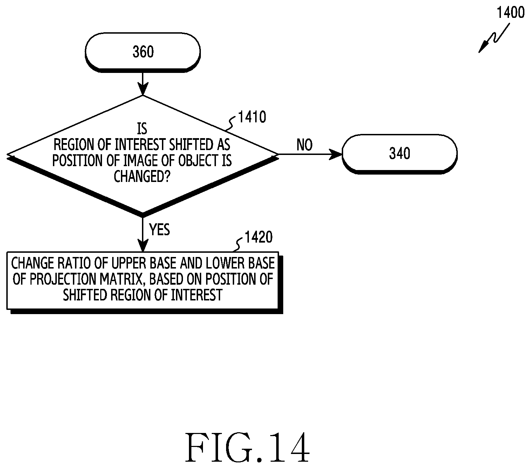

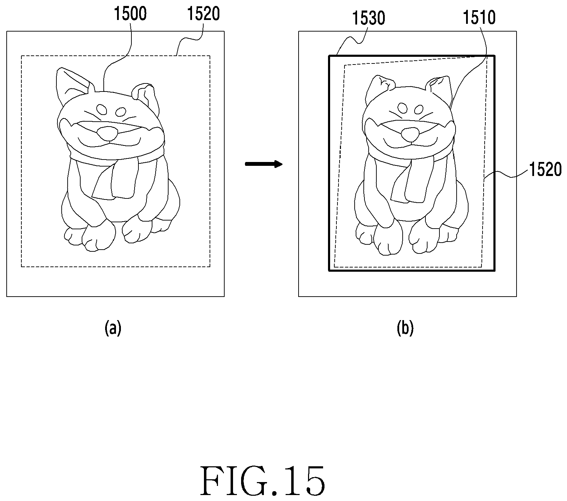

According to an embodiment of the disclosure, FIG. 14 is a flowchart 1400 illustrating a process for a method for an electronic device to change a region of interest based on a motion of an object according to an embodiment. FIG. 15 is a view illustrating an example of an electronic device changing a region of interest based on a motion of an object according to an embodiment.

In an embodiment of the disclosure, when the processor 210 changes the projection matrix in operation 340 after operation 330 is performed, the processor 210 may consider position information of the region of interest which is shifted according to a motion of the object. Operations 1410 to 1420 are not limited to operations that should be necessarily performed after operation 330.

In an embodiment of the disclosure, referring to FIG. 14, in operation 1410, the processor 210 may identify whether the region of interest is shifted as the position of an object image is changed. When the processor 210 identifies that the region of interest is not shifted, the processor 210 may perform operation 340. When the processor 210 identifies that the region of interest is shifted, the processor 210 may perform operation 1420.

According to an embodiment of the disclosure, the processor 210 may identify position information of the region of interest which is shifted within the preview image according to a motion of the object in order to trace the moving object. The processor 210 may shift the region of interest to define the position of the region of interest corresponding to the object after movement. The processor 210 may change the projection matrix based on the shifted region of interest. For example, referring to FIG. 15, when an original object 1500 before movement moves and becomes a moved object 1510 after movement, the position of a first region of interest 1520 corresponding to the position of the image of the original object 1500 may be shifted to correspond to the position of the image of the moved object 1510. When the processor 210 applies the projection matrix for correcting the distortion of the image of the original object 1500 to the image of the moved object 1510 as it is, a distortion may occur. Th processor 210 may change the projection matrix based on information of the position where the first region of interest is shifted, and may apply the changed projection matrix to the image of the moved object 1510.

In an embodiment of the disclosure, referring to FIG. 14, in operation 1420, the processor 210 may change the ratio of the upper base and the lower base of the projection matrix, based on the position of the shifted region of interest. The processor 210 may change the projection matrix based on a change between the position of the original region of interest before movement and the position of the shifted region of interest after movement. For example, referring to FIG. 15, the original object 1500 may be biased to the left of the object 1500 with reference to the image of the object 1500, and therefore, the first region of interest 1520 may also be defined to correspond to the object 1500. In contrast, the moved object 1510 may have the right ear portion further protruding than the left ear portion, and the center of gravity may be shifted to the right compared to the original object 1500. Accordingly, the second region of interest 1530 may be shifted to the right with reference to the image of the moved object 1510, compared to the first region of interest 1520, and may be defined for the object. The processor 210 may change the projection matrix, based on a result of comparing information on the position where the second region of interest 1530 is defined and information on the position where the first region of interest 1520 is defined. For example, referring to a modified projection matrix 1540 of FIG. 15, the processor 210 may change the shape of the modified projection matrix 1540 to a parallelogram that is biased to the right with reference to the image of the moved object 1510, instead of the rectangle. The processor 210 may define a third region of interest including an image resulting from correction of the image of the moved object 1510, based on the modified projection matrix 1540. The processor 210 may output the image of the object included in the third region of interest to the display 240 as a preview image.

In an embodiment of the disclosure, the processor 210 may change the projection matrix based on the ratio of the upper base and the lower base (for example, b/a value) of the image of the object within the region of interest. In the ratio of the upper base and the lower base, *b* may refer to the length of a minor axis of the image with reference to the image of the object, and *a* may refer to the length of a major axis. For example, the ratio of the upper base and the lower base of the object image that is acquired when the object is not moved may be set to b/a=1 in the electronic device 200.

In an embodiment of the disclosure, when the object is a person and person's chin further protrudes than person's forehead according to movement of the person, the processor 210 may change the projection matrix to increase the ratio of *a* compared to *b,* based on identifying that the ratio of the upper base and the lower base of the image of the object within the region of interest is b/a<1. The processor 210 may correct the ratio of the upper base and the lower base of the image of the object to be close to 1, based on the changed projection matrix. For example, when the object is a person and person's forehead further protrudes than person's chin according to movement of the person, the processor 210 may change the projection matrix to increase the ratio of *b* compared to *a,* based on identifying that the ratio of the upper base and the lower base of the image of the object within the region of interest is b/a>1. The processor 210 may correct the ratio of the upper base and the lower base of the image of the object to be close to 1, based on the changed projection matrix.

In an embodiment of the disclosure, even when the object is not moved as shown in the example of FIG. 15, the processor 210 may reset the region of interest. For example, a region of interest that includes an image of an original object before correction may be defined as a first region of interest, a region of interest after the projection matrix is applied may be defined as a second region of interest, and a region of interest resulting from correction of the second region of interest may be defined as a third region of interest. When the processor 210 applies the projection matrix to the image of the object before correction in order to correct a distortion of the image of the object before correction, coordinates values of a plurality of pixels included in the first region of interest may be distorted. The processor 210 may re-arrange coordinate values of a plurality of pixels included in the second region of interest and may output the third region of interest to the display 240. For example, referring to FIG. 15, the first region of interest may be the first region of interest 1520 of FIG. 15, and the third region of interest may be the second region of interest 1530 of FIG. 15. Although not shown in FIG. 15, a region of interest resulting from re-arrangement of coordinate values of the plurality of pixels included in the second region of interest may be the second region of interest 1530 of FIG. 15.

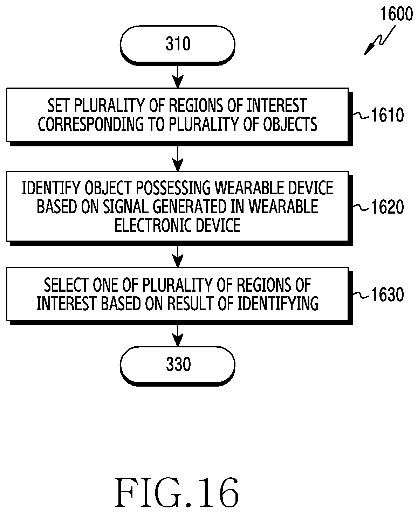

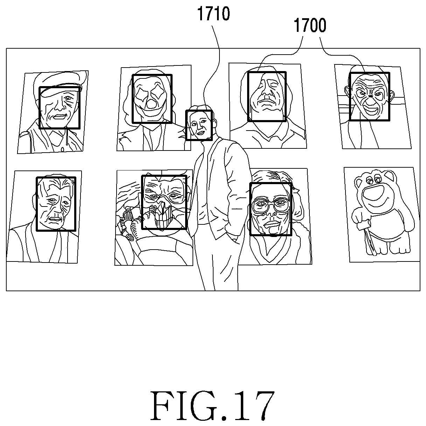

According to an embodiment of the disclosure, FIG. 16 is a flowchart 1600 illustrating a process for a method for identifying an object possessing a wearable electronic device connected to an electronic device among a plurality of objects according to an embodiment. FIG. 17 is a view illustrating an example of identifying an object possessing a wearable electronic device connected with an electronic device among a plurality of objects according to an embodiment.

According to an embodiment of the disclosure, in operation 310, the processor 210 may identify a plurality of objects within the preview image outputted to the display. For example, referring to FIG. 17, in response to a user input of determining a type of an object (for example, person, animal) for setting a region of interest, the processor 210 may recognize persons' faces in portraits 1700 drawn in the works of art as objects for setting a region of interest, in addition to a real person 1710, even if the processor 210 already sets the object for setting a region of interest to persons.

In an embodiment, referring to FIG. 16, in operation 1610, the processor 210 may set a plurality of regions of interest corresponding to the plurality of objects. The processor 210 may set the plurality of regions of interest for the objects that are recognized as the same type of object. For example, referring to FIG. 17, the processor 210 may recognize not only the real person positioned at the center but also pictures of faces in the plurality of portraits around the person as the same type of object as the real person. The processor 210 may set the plurality of regions of interest for the plurality of objects that are recognized as the same as the person's face.

According to an embodiment of the disclosure, images of objects within the regions of interest set for the plurality of objects may be images that are corrected based on a changed projection matrix. For example, the processor 210 may change the projection matrix differently for each object, based on at least one of a position of each object in the preview image, a position of the camera 230 relative to the electronic device, an angle of the camera 230 for capturing the objects relative to the horizontal plane, or a motion of each object. The processor 210 may set a region of interest including the image of each object which is corrected based on the projection matrix changed differently for each object. The processor 210 may output the corrected images of the objects on the display 240 as preview images.

In an embodiment of the disclosure, referring to FIG. 16, in operation 1620, the processor 210 may identify an object possessing a wearable device, based on a signal generated from the wearable device. The processor 210 may identify only the object possessing the wearable device among the plurality of objects as an object for setting a region of interest. For example, referring to FIG. 17, only the real person wearing a wearable electronic device (for example, a smart watch) may be identified as an object for setting a region of interest among the plurality of objects.

In an embodiment of the disclosure, the processor 210 may identify the wearable electronic device through the communication unit. The processor 210 may transmit a signal requesting device information of the wearable electronic device to the wearable electronic device. For example, the device information of the wearable electronic device may include but not limited to the model name, international mobile equipment identity (IMEI) number, manufacturer, operating system, version information, screen resolution of the wearable electronic device, and an identification value of an application installed in the wearable electronic device. The wearable electronic device may transmit the device information to the electronic device 200 based on the received signal. The processor 210 may identify the wearable electronic device based on the signal received from the wearable electronic device.

In an embodiment of the disclosure, the processor 210 may identify only the object wearing the wearable electronic device as an object for setting a region of interest, based on the identified wearable electronic device information. For example, the processor 210 may identify only the face of the real person possessing the wearable electronic device, at the center of FIG. 17, as an object for setting a region of interest.

In an embodiment of the disclosure, the processor 210 may transmit the result of identifying the object to the wearable electronic device. For example, referring to FIG. 11, when the processor 210 identifies the object possessing the wearable electronic device as an object for setting a region of interest among the plurality of objects, the processor 210 may transmit the result of identifying to the wearable electronic devices 1110. The wearable electronic devices 1110 may transmit a signal for setting a region of interest in the identified object to the electronic device 1100. The electronic device 1100 may set a region of interest in the identified object, based on the received signal. For example, when the result of identifying the object is transmitted through the smart earphone 1110-2, the electronic device 1300 may set a region of interest in the identified object in response to an input for setting the region of interest using the smart pen 1110-3.

In an embodiment of the disclosure, referring to FIG. 16, in operation 1630, the processor 210 may select one of the plurality of regions of interest based on the result of identifying the object. The processor 210 may set a region of interest only for the object possessing the wearable electronic device among the plurality of regions of interest, based on identifying the object possessing the wearable electronic device as the object for setting the region of interest. The processor 210 may output only the image of the object for which the region of interest is set on the display 240 as a preview image. For example, the processor 210 may output only the image of the real person in FIG. 17 to the display 240 as a preview image.

In an embodiment of the disclosure, the processor 210 may select only one of the plurality of regions of interest as a region of interest, in response to a user input of selecting at least one of the plurality of regions of interest. For example, in response to a user's touch input of selecting one of the plurality of regions of interest displayed on the display 240, the processor 210 may set only the touched region of interest as a region of interest. For example, in response to an input of selecting a UI displayed on the display 240, the processor 210 may set only a specific region of interest as a region of interest.

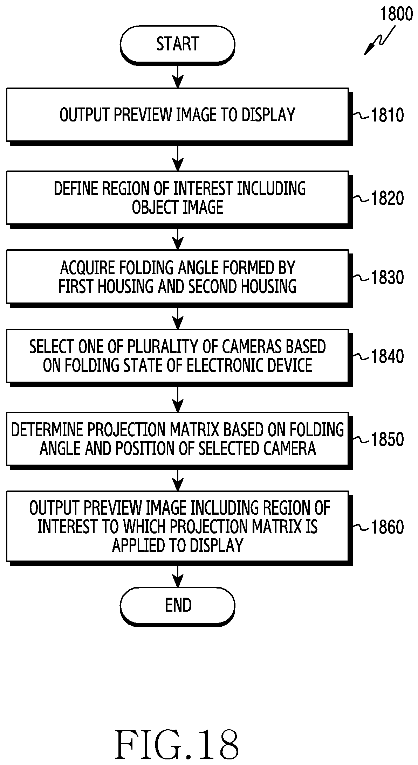

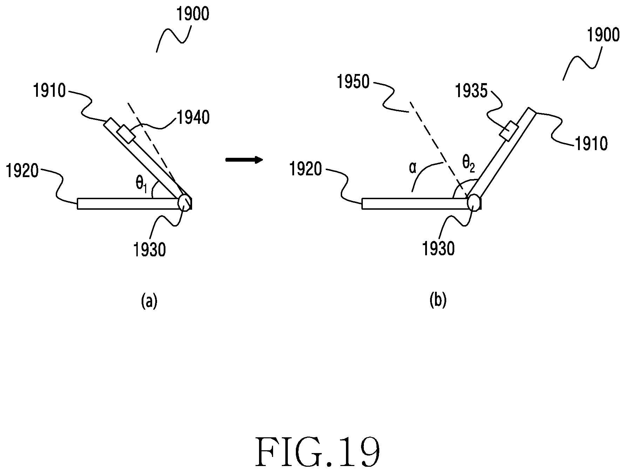

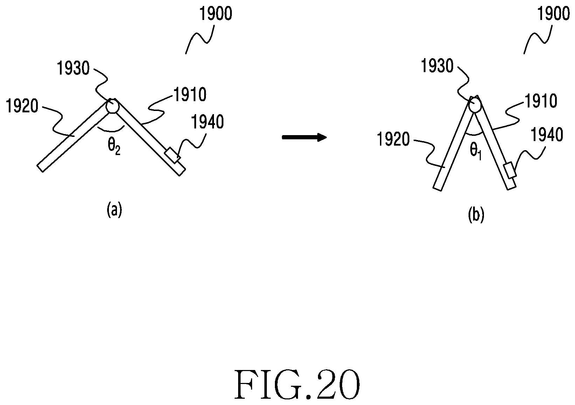

According to an embodiment of the disclosure, FIG. 18 is a flowchart illustrating a process for a method for a foldable electronic device to correct a distortion of a region of interest including an object image based on a projection matrix. FIG. 19 is a view illustrating an example of a first folding state of the foldable electronic device according to an embodiment. FIG. 20 is a view illustrating an example of a second folding state of the foldable electronic device according to an embodiment.

According to an embodiment of the disclosure, referring to FIG. 18, operation 1810 may correspond to operation 310 of FIG. 3.

According to an embodiment of the disclosure, referring to FIG. 18, operation 1820 may correspond to operation 320 of FIG. 3.

According to an embodiment of the disclosure, referring to FIG. 18, in operation 1830, the processor 210 may acquire a folding angle formed by housings. The foldable electronic device 1900 of FIG. 19 may correspond to at least one of the electronic device 101 of FIG. 1, the electronic device 200 of FIG. 2, the electronic device 500 of FIG. 5, the electronic device 1100 of FIG. 11, or the electronic device 1300 of FIG. 13.

According to an embodiment of the disclosure, the foldable electronic device 1900 may include a first housing 1910. The first housing 1910 may include a first surface facing a first direction and a second surface facing a second direction which is opposite to the first direction. The foldable electronic device 1900 may include a second housing 1920. The second housing 1920 may include a third surface facing a third direction and a fourth surface facing a fourth direction which is opposite to the third direction. The first housing 1910 and the second housing 1920 may be connected via a hinge 1930. A first camera 1930 may be provided on at least a part of the first surface of the first housing 1910. A second camera 1940 may be provided on at least a part of the second surface of the first housing 1910. A first display may be provided on at least a part of the first surface of the first housing 1910 and the third surface of the second housing 1920 although it is not illustrated in FIG. 19. A second display may be provided on at least a part of the second surface of the first housing 1910.

According to an embodiment of the disclosure, the first housing 1910 may include a first hall sensor and a first magnet. The second housing 1920 may include a second hall sensor and a second magnet. The hall sensor may detect a change in electric signals based on approach or retreat of an object having a magnetic force. The hall sensor may measure a magnetic force value and may transmit the measured magnetic force value to the processor 210. The processor 210 may acquire a folding angle formed by the housings, based on the received magnetic force value. For example, at least one of the first hall sensor or the second hall sensor may measure a magnetic force value changing based on the approach or retreat of the first housing 1910 to or from the second housing 1920. The processor 210 may receive the measured magnetic force value and may acquire a folding angle of the housings.

According to an embodiment of the disclosure, referring to FIG. 18, in operation 1840, the processor 210 may select one of the plurality of cameras based on a folding state of the electronic device. The folding state may include a first folding state and a second folding state. Referring to FIGS. 19A, 19B, the first folding state may include, for example, a state in which the fourth surface of the second housing 1920 of the foldable electronic device 1900 is placed in parallel with the horizontal plane. For example, the first folding state may include a state in which the fourth surface of the second housing 1920 of the foldable electronic device 1900 is placed on a bottom. For example, the first folding state may include a state in which the fourth surface of the second housing 1920 is held on a bottom. Referring to FIGS. 20A, 20B, the second folding state may include, for example, a state in which the hinge is moved in a direction opposite to the horizontal plane as the folding angle θ is reduced. For example, the second folding state may include a state in which the hinge 1930 is positioned relatively farther away from the ground than in the first folding state. For example, the second folding state may include a state in which at least a part of the first housing 1910 and at least a part of the second housing 1920 are in contact with a bottom.

According to an embodiment of the disclosure, the processor 210 may select at least one camera based on a folding state and a folding angle. The at least one camera may include the first camera 1935 and the second camera 1940. For example, when the folding angle θ is smaller than a reference angle α in the first folding state of FIG. 19, the processor 210 may select the second camera 1940. For example, when the folding angle θ is larger than the reference angle α in the first folding state of FIG. 19, the processor 210 may select the first camera 1935. For example, the processor 210 may select the second camera 1940 while being in the second folding state of FIG. 20.

According to an embodiment of the disclosure, referring to FIG. 18, in operation 1850, the processor 210 may determine a projection matrix based on the folding angle and the position of the selected camera.

According to an embodiment of the disclosure, the processor 210 may determine a projection matrix based on a change in the folding angle of the foldable electronic device 210. For example, referring to FIG. 19, when the folding angle θ is smaller than the reference angle α, the second camera 1940 may be selected. When the second camera 1940 is selected, an object image within a region of interest that is acquired through the second camera 1940 may be an image that is distorted to have a relatively wide lower end of the object as the folding angle θ₁ is reduced. The processor 210 may determine the projection matrix 700 of FIG. 7 as a projection matrix for correcting the distorted object image. For example, referring to FIG. 19, when the folding angle θ is larger than the reference angle α, the first camera 1935 may be selected. When the first camera 1935 is selected, an object image within a region of interest that is acquired through the first camera 1935 may be an image that is distorted to have a relatively wide lower end of the object as the folding angle θ₂ increases. The processor 210 may determine the projection matrix 700 of FIG. 7 as a projection matrix for correcting the distorted object image. For example, referring to FIG. 20, the second camera 1940 may be selected in the second folding state. When the second camera 1940 is selected, an object image within a region of interest that is acquired through the second camera 1940 may be an image that is distorted to have a relatively wide upper end of the object as the folding angle is reduced from θ₂ to θ₁. The processor 210 may determine the projection matrix 800 of FIG. 8 as a projection matrix for correcting the distorted object image.

According to an embodiment of the disclosure, the processor 210 may determine a projection matrix based on a position of a camera of the foldable electronic device 1900. For example, the position of the second camera 1940 in the second folding state of FIG. 20 may be relatively closer to the ground than the position of one of the first camera 1945 or the second camera 1940 of FIG. 19. An object image within a region of interest that is acquired through the second camera 1940 in the second folding state may be an image that is distorted to have a relatively wide lower end of the object. The processor 210 may determine, as a projection matrix for correcting the distorted object image acquired in the second folding state, a projection matrix in a trapezoidal shape with the longer lower side than the projection matrix for correcting the object image within the region of interest acquired through one of the first camera 1935 or the second camera 1940 in the first folding state. The processor 210 may determine or change the projection matrix by also considering a position of a camera based on a folding angle and a folding state.

According to an embodiment of the disclosure, referring to FIG. 18, operation 1860 may correspond to operation 360 of FIG. 3.

According to an embodiment of the disclosure, there may be provided a method for correcting a distortion occurring according to a tilt of a camera, a motion of an object, or a position of a camera when an electronic device corrects a distortion of an image.

According to an embodiment of the disclosure, there may be provided a method for correcting a distortion of an image acquired from an electronic device using a wearable electronic device even at a long distance.

According to an embodiment of the disclosure, an electronic device may include a camera, at least one sensor configured to acquire sensing data for detecting a tilt of the electronic device, a display, a memory configured to store instructions, and one or more processors. When executed by the one or more processors, the instructions may cause the electronic device to: display a preview image acquired by the camera on the display; define a region of interest including at least one object image within the preview image; acquire angle information which is used for identifying a direction in which the camera is oriented relative to a reference plane in response to the tilt of the electronic device being detected; determine a projection matrix to be applied to the region of interest, based on the angle information and position information of the region of interest within the preview image; apply the projection matrix to the region of interest including the at least one object image; and display another preview image including the region of interest to which the projection matrix is applied on the display.

According to an embodiment of the disclosure, when executed by the one or more processors, the instructions may cause the electronic device to perform a zoom function and/or a panning function of the camera to convert display of the preview image to display of the other preview image.

According to an embodiment of the disclosure, when executed by the one or more processors, the instructions may cause the electronic device to: define a plurality of regions of interest including the region of interest within the preview image; and determine a ratio of an upper base and a lower base of the projection matrix to be applied to the region of interest in response to a user input of selecting the region of interest among the plurality of regions of interest being received.

According to an embodiment of the disclosure, the at least one sensor may include a gyro sensor, and, when executed by the one or more processors, the instructions may cause the electronic device to: acquire rotation information of the electronic device which is detected by the gyro sensor; identify a position of the camera; and determine a ratio of an upper base and a lower base of the projection matrix, based on the identified position of the camera.

According to an embodiment of the disclosure, when executed by the one or more processors, the instructions may cause the electronic device to: shift the region of interest within the preview image in response to the position of the at least one object image within the preview image being changed; and change a ratio of an upper base and a lower base of the projection matrix based on a position of the shifted region of interest.

According to an embodiment of the disclosure, the electronic device may further include a communication unit configured to perform wireless communication with a wearable electronic device. When executed by the one or more processors, the instructions may cause the electronic device to: control the communication unit to output at least a part of the preview image including the region of interest to the wearable electronic device; receive a control signal for adjusting a correction level of the at least one object image from the wearable electronic device through the communication unit; and control the communication unit to output the at least one object image that is corrected based on the control signal to the wearable electronic device.

According to an embodiment of the disclosure, when executed by the one or more processors, the instructions may cause the electronic device to: define a plurality of regions of interest corresponding to a plurality of objects in the preview image; identify an object possessing the wearable electronic device based on a signal generated in the wearable electronic device; and select one of the plurality of regions of interest based on the identified object.

According to an embodiment of the disclosure, the electronic device may further include: a first housing including a hall sensor and forming a first surface facing a first direction and a second surface facing a second direction which is opposite to the first direction; and a second housing connected with the first housing via a hinge, including a second hall sensor, and forming a third surface facing a third direction and a fourth surface facing a fourth direction which is opposite to the third direction. When executed by the one or more processors, the instructions may cause the electronic device to: acquire a folding angle formed by the first housing and the second housing, based on a magnetism signal detected by at least one of the first hall sensor or the second hall sensor; and determine the projection matrix based on the folding angle.

According to an embodiment of the disclosure, the electronic device may further include another camera. The camera may be provided on at least a part of the first surface of the first housing. The other camera may be provided on at least a part of the second surface of the first housing. The at least one sensor may include a gyro sensor. When executed by the one or more processors, the instructions may cause the electronic device to: identify a folding state of the electronic device, based on a movement of the first housing or the second housing detected by the gyro sensor; select one of the camera and the other camera based on the folding state; and determine the projection matrix based on a position of the selected camera.

According to an embodiment of the disclosure, the folding state may include a first folding state in which the fourth surface of the second housing is placed in parallel with a horizontal plane, and a second folding state in which the hinge is moved in a direction opposite to the horizontal plane as the folding angle is reduced. When executed by the one or more processors, the instructions may cause the electronic device to, in the first folding state of the electronic device, select the other camera when the folding angle is less than or equal to a predetermined range; and select the camera when the folding angle exceeds the predetermined range. When executed by the one or more processors, the instructions may cause the electronic device to select the other camera in the second folding state of the electronic device.

According to an embodiment of the disclosure, an operation method of an electronic device may include: displaying a preview image acquired by a camera on a display; defining a region of interest including at least one object image within the preview image; acquiring angle information which is used for identifying a direction in which the camera is oriented relative to a reference plane in response to a tilt of the electronic device being detected; determining a projection matrix to be applied to the region of interest, based on the angle information and position information of the region of interest within the preview image; applying the projection matrix to the region of interest including the at least one object image; and displaying another preview image including the region of interest to which the projection matrix is applied on the display.

According to an embodiment of the disclosure, the operation method of the electronic device may further include performing a zoom function and/or a panning function of the camera to convert display of the preview image to display of the other preview image.

According to an embodiment of the disclosure, the operation method of the electronic device may further include: defining a plurality of regions of interest including the region of interest within the preview image; and determining a ratio of an upper base and a lower base of the projection matrix to be applied to the region of interest in response to a user input of selecting the region of interest among the plurality of regions of interest being received.

According to an embodiment of the disclosure, the operation method of the electronic device may further include: acquiring rotation information of the electronic device which is detected by a gyro sensor; identifying a position of the camera, based on the rotation information; and determining a ratio of an upper base and a lower base of the projection matrix, based on the identified position of the camera.

According to an embodiment of the disclosure, the operation method of the electronic device may further include: shifting the region of interest within the preview image in response to the position of the at least one object image within the preview image being changed; and changing a ratio of an upper base and a lower base of the projection matrix based on a position of the shifted region of interest.

According to an embodiment of the disclosure, the operation method of the electronic device may further include: controlling a communication unit to output at least a part of the preview image including the region of interest to a wearable electronic device; receiving a control signal for adjusting a correction level of the at least one object image from the wearable electronic device through the communication unit; and controlling the communication unit to output the at least one object image that is corrected based on the control signal to the wearable electronic device.

According to an embodiment of the disclosure, the operation method of the electronic device may further include: defining a plurality of regions of interest corresponding to a plurality of objects in the preview image; identifying an object possessing the wearable electronic device based on a signal generated in the wearable electronic device; and selecting one of the plurality of regions of interest based on the identified object.

According to an embodiment, the electronic device may further include: a first housing including a hall sensor and forming a first surface facing a first direction and a second surface facing a second direction which is opposite to the first direction; and a second housing connected with the first housing via a hinge, including a second hall sensor, and forming a third surface facing a third direction and a fourth surface facing a fourth direction which is opposite to the third direction. The operation method of the electronic device may further include: acquiring a folding angle formed by the first housing and the second housing, based on a magnetism signal detected by at least one of the first hall sensor or the second hall sensor; and determining the projection matrix based on the folding angle.

According to an embodiment of the disclosure, the camera may be provided on at least a part of the first surface of the first housing, and another camera may be provided on at least a part of the second surface of the first housing. The at least one sensor may include a gyro sensor. The operation method of the electronic device may further include: identifying a folding state of the electronic device, based on a movement of the first housing or the second housing detected by the gyro sensor; selecting one of the camera and the other camera based on the folding state; and determining the projection matrix based on a position of the selected camera.

According to an embodiment of the disclosure, the folding state may include a first folding state in which the fourth surface of the second housing is placed in parallel with a horizontal plane, and a second folding state in which the hinge is moved in a direction opposite to the horizontal plane as the folding angle is reduced. The operation method of the electronic device may include: in the first folding state of the electronic device, selecting the other camera when the folding angle is less than or equal to a predetermined range; selecting the camera when the folding angle exceeds the predetermined range; and, in the second folding state of the electronic device, selecting the other camera.

According to an embodiment of the disclosure, there may be an effect that effectively corrects a distortion of an image by considering a distortion caused by a tilt of a camera when an electronic device corrects a distortion of an image.

According to an embodiment of the disclosure, there may be an effect that increases usability of an electronic device by correcting a distortion of an image at a long distance based on a control signal from a wearable electronic device.

In addition, various effects that are directly or indirectly understood through the disclosure may be provided.

## Claims

1. An electronic device comprising:
a camera;
at least one sensor configured to acquire sensing data for detecting a tilt of the electronic device;
a display;
a memory configured to store instructions; and
one or more processors,
wherein, when executed by the one or more processors, the instructions cause the electronic device to:
display a preview image acquired by the camera on the display;
define a region of interest including at least one object image within the preview image;
acquire angle information which is used for identifying a direction in which the camera is oriented relative to a reference plane in response to the tilt of the electronic device being detected;
determine a projection matrix to be applied to the region of interest, based on the angle information and position information of the region of interest within the preview image;
apply the projection matrix to the region of interest including the at least one object image; and
display another preview image including the region of interest to which the projection matrix is applied on the display.

2. The electronic device of claim 1, wherein, when executed by the one or more processors, the instructions cause the electronic device to perform a zoom function and/or a panning function of the camera to convert display of the preview image to display of the other preview image.

3. The electronic device of claim 1, wherein, when executed by the one or more processors, the instructions cause the electronic device to:
define a plurality of regions of interest including the region of interest within the preview image; and
determine a ratio of an upper base and a lower base of the projection matrix to be applied to the region of interest in response to a user input of selecting the region of interest among the plurality of regions of interest being received.

4. The electronic device of claim 1, wherein the at least one sensor comprises a gyro sensor, and
wherein, when executed by the one or more processors, the instructions cause the electronic device to:
acquire rotation information of the electronic device which is detected by the gyro sensor;
identify a position of the camera, based on the rotation information; and
determine a ratio of an upper base and a lower base of the projection matrix, based on the identified position of the camera.

5. The electronic device of claim 1, wherein, when executed by the one or more processors, the instructions cause the electronic device to:
shift the region of interest within the preview image in response to the position of the at least one object image within the preview image being changed; and
change a ratio of an upper base and a lower base of the projection matrix based on a position of the shifted region of interest.

6. The electronic device of claim 1, further comprising a communication unit configured to perform wireless communication with a wearable electronic device,
wherein, when executed by the one or more processors, the instructions cause the electronic device to:
control the communication unit to output at least a part of the preview image including the region of interest to the wearable electronic device;
receive a control signal for adjusting a correction level of the at least one object image from the wearable electronic device through the communication unit; and
control the communication unit to output the at least one object image that is corrected based on the control signal to the wearable electronic device.

7. The electronic device of claim 6, wherein, when executed by the one or more processors, the instructions cause the electronic device to:
define a plurality of regions of interest corresponding to a plurality of objects in the preview image;
identify an object possessing the wearable electronic device based on a signal generated in the wearable electronic device; and
select one of the plurality of regions of interest based on the identified object.

8. The electronic device of claim 1, further comprising:
a first housing comprising a hall sensor and forming a first surface facing a first direction and a second surface facing a second direction which is opposite to the first direction; and
a second housing connected with the first housing via a hinge, comprising a second hall sensor, and forming a third surface facing a third direction and a fourth surface facing a fourth direction which is opposite to the third direction,
wherein, when executed by the one or more processors, the instructions cause the electronic device to:
acquire a folding angle formed by the first housing and the second housing, based on a magnetism signal detected by at least one of the first hall sensor or the second hall sensor; and
determine the projection matrix based on the folding angle.

9. The electronic device of claim 8, further comprising another camera,
wherein the camera is provided on at least a part of the first surface of the first housing,
wherein the other camera is provided on at least a part of the second surface of the first housing,
wherein the at least one sensor comprises a gyro sensor, wherein, when executed by the one or more processors, the instructions cause the electronic device to:
identify a folding state of the electronic device, based on a movement of the first housing or the second housing detected by the gyro sensor;
select one of the camera and the other camera based on the folding state;
and
determine the projection matrix based on a position of the selected camera.

10. The electronic device of claim 9, wherein the folding state comprises a first folding state in which the fourth surface of the second housing is placed in parallel with a horizontal plane, and a second folding state in which the hinge is moved in a direction opposite to the horizontal plane as the folding angle is reduced,
wherein, when executed by the one or more processors, the instructions cause the electronic device to:
in the first folding state of the electronic device,
select the other camera when the folding angle is less than or equal to a predetermined range;
select the camera when the folding angle exceeds the predetermined range;
and
in the second folding state of the electronic device, select the other camera.

11. An operation method of an electronic device, the operation method comprising:
displaying a preview image acquired by a camera on a display;
defining a region of interest including at least one object image within the preview image;
acquiring angle information which is used for identifying a direction in which the camera is oriented relative to a reference plane in response to a tilt of the electronic device being detected;
determining a projection matrix to be applied to the region of interest, based on the angle information and position information of the region of interest within the preview image;
applying the projection matrix to the region of interest including the at least one object image; and
displaying another preview image including the region of interest to which the projection matrix is applied on the display.

12. The operation method of claim 11, further comprising performing a zoom function and/or a panning function of the camera to convert display of the preview image to display of the other preview image.

13. The operation method of claim 11, further comprising:
defining a plurality of regions of interest including the region of interest within the preview image; and
determining a ratio of an upper base and a lower base of the projection matrix to be applied to the region of interest in response to a user input of selecting the region of interest among the plurality of regions of interest being received.

14. The operation method of claim 11, further comprising:
acquiring rotation information of the electronic device which is detected by a gyro sensor;
identifying a position of the camera, based on the rotation information;
and
determining a ratio of an upper base and a lower base of the projection matrix, based on the identified position of the camera.

15. The operation method of claim 11, further comprising:
shifting the region of interest within the preview image in response to the position of the at least one object image within the preview image being changed; and
changing a ratio of an upper base and a lower base of the projection matrix based on a position of the shifted region of interest.
